## Europäisches Patentamt
## European Patent Office
## Office européen des brevets

(19)

(11) Publication number: **0 070 868**
**B1**

# EUROPEAN PATENT SPECIFICATION

(12)

(45) Date of publication of patent specification: **28.08.85**

(51) Int. Cl.⁴: **A 23 K 1/22**

(21) Application number: **82900530.5**

(22) Date of filing: **21.01.82**

(86) International application number:
**PCT/US82/00068**

(87) International publication number:
**WO 82/02651 19.08.82 Gazette 82/20**

(54) **FEED SUPPLEMENT COMPOSITION FOR RUMINANT ANIMALS AND METHOD OF USING SAME.**

(30) Priority: **09.02.81 US 232492**

(43) Date of publication of application:
**09.02.83 Bulletin 83/06**

(45) Publication of the grant of the patent:
**28.08.85 Bulletin 85/35**

(84) Designated Contracting States:
**DE FR GB NL SE**

(56) References cited:
**GB-A-1 309 863**
**US-A-3 413 118**
**US-A-3 564 098**
**US-A-3 806 600**

(73) Proprietor: **EASTMAN KODAK COMPANY**
**343 State Street**
**Rochester New York 14650 (US)**

(72) Inventor: **AMES, Stanley Richard**
**61 Biltmore Drive**
**Rochester, NY 14617 (US)**

(74) Representative: **Baron, Paul Alexander Clifford**
**et al**
**Kodak Limited Patent Department Headstone**
**Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 070 868 B1

# 0 070 868

**Description**

This invention relates to a composition suitable for feeding ruminant animals. More particularly, this invention relates to a feed supplement composition for ruminant animals and to a method of feeding such animals.

Ruminant animals such as cattle live on ingested forage containing large amounts of cellulose which cannot be directly digested. Accordingly, such animals have evolved a symbiotic relationship with microorganisms composed of a variety of bacteria and protozoa. In the rumen, the bacteria digest the forage for their own survival and growth. The host ruminant animal digests these bacteria and their by-products which serve as major sources of energy and protein for maintenance of the animal's body tissue and for milk production. It is known to treat ruminant animal feedstuffs with feed supplement compositions designed to enhance this digestive process in ruminant animals. For example, the *Journal of Dairy Science*, Vol. 63, No. 7, 1980, Pages 1098—1103, describes the use of mixtures of "isoacids" (isobutyric, valeric, isovaleric and 2-methylbutyric acids) with and without urea as feed supplement compositions for lactating dairy cows. As shown in this article, particularly Table 2, the mixture of the isoacids plus phenylacetate increased milk production in dairy cows as compared to urea alone (trial 1). However, the use of the mixture of isoacids without the phenylacetate did not significantly improve milk production as compared to urea alone (Trials 2 and 4). Also, the use of mixtures of the isoacids without phenylacetate and urea provided ambiguous and unpredictable results. Thus, one mixture of isoacids (isobutyric, isovaleric, 2-methylbutyric and n-valeric, 28, 24, 24 and 24 percent, molar basis, respectively (identified as Mixture 1)) provided no significant increase in milk production while a mixture of these same acids having corresponding molar percents of 36, 17, 17 and 30, provided some increase in milk production in comparison to urea alone (Trial 3). The article clearly states "No explanation for the difference between the two isoacid mixtures is apparent." Furthermore, feed supplements containing mixtures of isoacids of the type described in the Journal of Dairy Science Article often are not readily accepted by dairy cows. It is evident, therefore, that a feed supplement composition that is readily accepted by ruminant animals such as dairy cows and consistently provides a significant increase in milk production represents a substantial advance in the art. Such a feed supplement composition and a method of using the composition for feeding such animals are obtained by practicing the invention described herein.

This invention provides a feed supplement composition for ruminant animals which composition comprises (1) 8 to 84 percent, by weight, of ammonium isobutyrate and (2) 16 to 92 percent, by weight, of a component having 3 to 63 percent, by weight, ammonium n-valerate, 3 to 51 percent, by weight, ammonium isovalerate and 3 to 67 percent, by weight, ammonium 2-methylbutyrate.

This invention also provides a feed for ruminant animals which includes the feed supplement composition just described.

Further, this invention provides a feed supplement composition, as previously described, in the form of an aqueous solution.

In addition, this invention provides a method of supplementing the diet of a ruminant animal. This method comprises orally administering to the ruminant animal the feed supplement composition of this invention.

It should be noted that the feed supplement composition of this invention contains ammonium salts of lower fatty acids and provides several significant advantages in comparison to feed supplement compositions containing mixtures of the corresponding acids, as described, for example, in the Journal of Dairy Science article discussed previously. Thus, in addition to providing a significant and unexpected increase in milk production when used as a feed supplement for dairy cows, the composition of this invention exhibit much less odor and corrosivity in comparison to a composition containing the corresponding acids. Accordingly, the feed supplement composition of this invention is much more convenient for humans, e.g., dairymen, to handle and damage to equipment due to corrosion is minimized. Furthermore, the ammonium salts are more readily accepted by ruminant animals than are the corresponding acids. In addition, the feed supplement composition of this invention can be used as a source of useful amounts of non-protein nitrogen for natural diets of ruminant animals or it can be used in combination with conventional non-protein nitrogen diet supplements such as urea. The feed supplement composition of this invention also furnishes a convenient means for simultaneously providing ammonia and lower fatty acids which stimulate the growth of the bacteria in the animal rumen which provide a source of protein for the host ruminant animals.

The feed supplement composition of this invention comprises one component which is an ammonium salt of a lower fatty acid containing four carbon atoms, i.e., ammonium isobutyrate, and a second component which comprises the ammonium salts of three lower fatty acids which each contain five carbon atoms, i.e., ammonium n-valerate, ammonium isovalerate and ammonium 2-methylbutyrate. The amount of ammonium isobutyrate used in practicing this invention is in the range of 8 to 84 percent, preferably 14 to 66 percent, and most preferably 21 to 50 percent, by weight, of the composition. The amount of the second component used in practicing this invention can be in the range of 16 to 92 percent, preferably 34 to 84 percent, and most preferably, 50 to 79 percent, by weight of the composition.

The ammonium salts providing the second component of the feed supplement composition are used in amounts of at least 3 percent, preferably at least 7 percent and most preferably at least 13 percent, by

2

weight, of that component. More specifically, the ammonium n-valerate is used in an amount in the range of 3 to 63 percent, preferably, 9 to 58 percent and most preferably 16 to 51 percent, by weight; the ammonium isovalerate is used in an amount in the range of 3 to 51 percent, preferably 7 to 46 percent and most preferably, 13 to 41 percent, by weight, and the ammonium 2-methylbutyrate is used in an amount in the range of 3 to 67 percent, preferably, 9 to 61 percent, and most preferably 17 to 54 percent, by weight. The weight percentages described herein, unless otherwise specified, are on a substantially anhydrous weight basis, as is conventional in this art.

The ammonium salts used in the feed supplement composition of this invention are readily available materials. They can be prepared by conventional methods such as reacting the corresponding individual acids or mixtures thereof with anhydrous or aqueous ammonia. The feed supplement composition can be formed by simply mixing individual ammonium salts in appropriate amounts using conventional methods which provide substantially uniform mixing. Of course, mixtures of two or more individual ammonium salts can also be mixed with one or more of the other ammonium salts in the same manner. For example, the ammonium salt of isobutyric acid can be blended with a mixture of the ammonium salts of n-valeric, isovaleric and 2-methylbutyric acids.

A mixture of the ammonium salts of n-valeric, isovaleric and 2-methylbutyric acids which is particularly useful in the practice of this invention has been prepared from the corresponding aldehydes made in a hydroformylation process. In this process, a mixed stream of butene-2 with isobutylene (or similar mixed streams of either butene-1 with isobutylene or n-butylene and isobutylene) is subjected to hydroformylation by treating the stream with a mixture of hydrogen and carbon monoxide gases in the presence of a hydroformylation catalyst to add hydrogen and the —CHO group across double bonds in the olefins. This provides a mixed aldehyde reaction product having, for example, the following composition; valeraldehyde (50 weight percent), isovaleraldehyde (25 weight percent) and 2-methylbutyraldehyde (25 weight percent). The mixed aldehyde reaction product is then oxidized with air to form the corresponding acid mixture. This acid mixture is then mixed with an appropriate amount of isobutyric acid which can be obtained by subjecting propylene to a hydroformylation reaction to form isobutyraldehyde and oxidizing the aldehyde with air. The mixture of the four acids (isobutyric, n-valeric, isovaleric and 2-methylbutyric) is purified by distillation and then reacted with ammonia gas or aqueous ammonia to provide a satisfactory feed supplement composition.

Ruminant animal feeds, as described and claimed herein, can be conveniently prepared by incorporating the feed supplement composition of this invention into conventional diets for ruminant animals. The individual components of the feed supplement composition can be easily added to diet rations as separate compounds or as mixtures. The composition can be added as absorbates on suitable carriers or in the form of solutions or emulsions in an oil such as vegetable oil. The feed supplement composition of this invention can be mixed with conventional feed additives such as vitamins, antibiotics, minerals and other similar materials to provide a suitable ruminant animal feed.

The feed supplement composition of this invention is preferably used in the form of a solution, typically an aqueous solution containing 1 to 50 percent, by weight, of water and 50 to 99 percent, by weight, of the ammonium salts. Preferably, the solution contains 20 to 35 percent, by weight, water and 65 to 80 percent, by weight, of the ammonium salts. The solution can be admixed with conventional dry feeds, feed concentrates or feed supplements. A roughage component such as silage or haylage can be pretreated with the solution and stored. The solution can also be added to a different liquid feed supplement or fed directly to the ruminant animal as a dilute solution in drinking water. Other conventional methods of oral administration can be used. The amount of feed supplement composition fed to the ruminant animal is subject to wide-variation, but amounts in the range of 10 to 150 grams of the anhydrous composition per animal per day are usually used. Preferred amounts are in the range of 80 to 105 grams (same basis).

Representative feed supplement compositions of this invention were fed to dairy cows in trials at three geographic locations in order to demonstrate their value in increasing milk production. The specific features of these trials are set forth in the following Example and Tables to further illustrate this invention.

Example

Seven treatments consisting of diets supplemented with six feed supplement compositions of this invention (identified as Supplements A, B, C, D, E and F in the following tables) and an unsupplemented control were fed to a total of 161 dairy cows in the trials. The treatments were fed to the cows starting approximately 3—6 weeks prior to calving and continued during the full lactation and following dry period. The full dose level was introduced gradually prior to calving and continued to be fed during the whole lactation period. It was reduced to two-thirds of full dose level during the dry period. Each feed supplement composition was used in the form of an aqueous solution (26 percent, by weight, water and 74 percent, by weight, of the ammonium salts). The make-up of each of the feed supplement compositions employed in the treatments is set forth in the following Table 1. For convenience, the ingredients in the feed supplement compositions are identified in Table 1 as AIB = ammonium isobutyrate, AV = ammonium valerate, AIV = ammonium isovalerate and A-2MB = ammonium 2-methylbutyrate. The component composed of the latter three ingredients (salts of five carbon acids) is designated AC-5.

3

TABLE 1

Make-up of Anhydrous Feed Supplement
(Percent, by weight)

| | AIB | Total AC-5 | Percent of Total AC-5 | | |
| --- | --- | --- | --- | --- | --- |
| | | | AV | AIV | A-2MB |
| Control | 0 | 0 | 0 | 0 | 0 |
| Supplement A | 66.87 | 33.13 | 12.1 | 9.14 | 11.9 |
| Supplement B | 10.31 | 89.69 | 32.74 | 24.75 | 32.2 |
| Supplement C | 15.27 | 84.73 | 30.92 | 23.39 | 30.42 |
| Supplement D | 32.5 | 67.50 | 24.64 | 18.63 | 24.23 |
| Supplement E | 56.26 | 43.74 | 15.97 | 12.07 | 15.7 |
| Supplement F | 32.5 | 67.5 | 24.64 | 18.63 | 24.23 |

The diets used in the trials comprised corn silage, basal protein-mineral premix, corn supplement-1 (C-Suppl-1), and corn gluten meal supplement-2 (CGM-Suppl-2) in proportions estimated to meet National Research Council recommended allowances based on milk production and the physiological state of each cow (National Research Council, Nutrient Requirements of Domestic Animals, No. 3, Nutrient Requirements of Dairy Cattle, Fifth Revised Edition, National Academy of Sciences National Research Council, Washington, D.C., U.S.A. (1978)). Except for the seven basal protein-mineral premixes representing the seven treatments, all other diet components were identical for all cows.

In each treatment the basal protein-mineral premix was used as a carrier for each feed supplement composition of Table 1. The ingredients in the basal protein-mineral premixes used in the seven treatments and the dosage levels for the treatments is set forth in the following Table 2. In Table 2, each treatment is identified with a letter corresponding to the letter of the feed supplement composition employed in that treatment. For example, in Treatment A, Supplement A was used.

4

Table 2

Basal Protein-Mineral Premixes

| Ingredient | Treatment, grams/cow/day — As Fed Basis | | | | | | |
|---|---|---|---|---|---|---|---|
| | Control | A | B | C | D | E | F |
| C-Suppl-1, fine grind | 968 | 928 | 906 | 840 | 821 | 875 | 874 |
| Ground Corn Cobs | 200 | 200 | 200 | 200 | 200 | 200 | 200 |
| Corn Gluten Meal, 60% Protein | 50 | 50 | 50 | 50 | 50 | 50 | 50 |
| Dicalcium Phosphate | 170 | 170 | 170 | 170 | 170 | 170 | 170 |
| Calcium Sulfate | 78 | 78 | 78 | 78 | 78 | 78 | 78 |
| T-M Salt | 54 | 54 | 54 | 54 | 54 | 54 | 54 |
| Magnesium Oxide | 15 | 15 | 15 | 15 | 15 | 15 | 15 |
| Vitamins A and $D_3$ | + | + | + | + | + | + | + |
| Urea | 289 | 278 | 274 | 257 | 252 | 265 | 265 |
| Supplement A | — | 40 | 0 | 0 | 0 | 0 | 0 |
| Supplement B | — | 0 | 62 | 0 | 0 | 0 | 0 |
| Supplement C        Anhydrous | — | 0 | 0 | 128 | 0 | 0 | 0 |
| Supplement D        Basis | — | 0 | 0 | 0 | 147 | 0 | 0 |
| Supplement E | — | 0 | 0 | 0 | 0 | 93 | 0 |
| Supplement F | — | 0 | 0 | 0 | 0 | 0 | 94 |
| | 1824 | 1813 | 1809 | 1792 | 1787 | 1800 | 1800 |

The basal protein-mineral premixes were used to provide specified daily doses (zero for the Control) of the feed supplement composition in a form that could be easily handled and subsequently mixed with a part or all of the total diet. The basal protein-mineral premixes were made isonitrogenous by reducing the urea level to compensate for the nitrogen in the ammonium salts. The basal protein-mineral premixes were made approximately isocaloric by substituting the corresponding amount of C-Suppl-1 in the premix for the weight of the anhydrous supplement equivalent.

C-Suppl-1 was a grain supplement formulated to provide supplemental energy, and nitrogen for cows producing less than 26 kg of milk daily. Approximately 20 percent, by weight, of the total nitrogen in C-Suppl-1 was in the form of urea.

Additional supplement, CGM-Suppl-2, was fed in proportion to milk production. This supplement was a high protein grain supplement and contained no urea. Corn gluten meal provided the main source of supplemental preformed protein. CGM-Suppl-2 in combination with C-Suppl-1 provided supplemental energy and protein for milk production over 26 kg/day.

C-Suppl-1 and CGM-Suppl-2 were modified for part of one trial. Soybean meal was used to increase the plant protein content of these two grain supplements. Beet pulp was replaced by molasses, corn and soybean meal. These modifications compensated for the depressed crude protein content of corn grain and corn silage. In addition, these modifications served to supplement the results of the three trials with data from cows fed even higher levels of preformed plant protein and energy especially in the early stages of lactation.

The corn silage was prepared by standard procedures in each of the three geographic locations. No ammonia, urea, or other compounds were added to the corn plant during ensiling. The appropriate basal protein-mineral premix was added to the silage to ensure good distribution of the urea and the supplements.

The schedules and methods of feeding were designed to approximate practical field conditions and to allow delivery of the specified dose of the feed supplement composition of this invention. Feeding of the

# 0 070 868

composition was started prior to calving (prepartum) in order to determine the treatment effect for the entire lactation including the early stages of high milk production. Feeding schedules were identical for all cows and were based on its milk production and physiological stage.

The cows were assigned to treatments approximately 3—6 weeks prepartum. The actual prepartum treatment period varied because individual cows were started on the basis of the expected date of calving which frequently was slightly different than the actual date of calving. The objective of the prepartum feeding schedule was to gradually introduce the cows to the diets including the feed supplement composition of this invention and to provide for feeding grain supplements with added nutritional value to maximize milk production.

The prepartum feeding schedule provided for *ad libitum* feeding of silage mixed with the basal protein-mineral premix defined by the treatment assignment of each cow. The amount of basal protein-mineral premix was increased from approximately 0 to 1/3 of the daily dosage listed in Table 2 in the third week prepartum to approximately 1/3 of the dose staring two weeks prepartum and approximately 2/3 of the dose starting one week prepartum. In addition, all cows were fed 2.0 kg of C-Suppl-1 and 2.0 kg CGM-Suppl-2 daily starting two weeks prepartum.

The feeding schedule for the lactation period was based on *ad libitum* feeding of corn silage, the appropriate basal protein-mineral premix (Table 2), and variable amounts of C-Suppl-1 and CGM-Suppl-2 according to milk production. The feeding schedule was identical for all treatments and was designed to supply the recommended nutrient allowances for lactating dairy cows.

During the dry period the amount of basal protein-mineral premix and mixture fed was reduced to 1.2 kg or approximately two-thirds of the amount fed during the lactation period. Each cow received the same basal protein-mineral premix for the prepartum, lactation, and dry periods.

The feeding schedules for all trials were indentical to those previously described except that in part of one trial the ffeding of 2.0 kg C-Suppl-1 and 2.0 kg CGM-Suppl-2 was continued for approximately 10 weeks postpartum.

In all three geographic locations the basal protein-mineral premixes and the grain supplements C-Suppl-1 and CGM-Suppl-2 were prepared periodically using essentially the same ingredients. Some minor modifications were made due to the variation of sources of minerals, trace minerals, and vitamins available in each location.

The design of the trials aimed for a standard 305-day lactation and a 60 to 80-day dry period.

Milk production (yield) was recorded to determine the response of the dairy cows to the feed supplement composition of this invention. Typical results obtained with Feed Supplements A-F and the unsupplemented control in the trials described herein, are set forth in the following Table 3:

## Table 3

### Milk Production, kg/cow/day

| Average Number of Days From Calving | Control | Supplements | | | | | |
| --- | --- | --- | --- | --- | --- | --- | --- |
| | | A | B | C | D | E | F |
| 36 | 31.0 | 31.1 | 31.9 | 31.7 | 30.6 | 30.9 | 33.8 |
| 78 | 29.4 | 30.1 | 31.0 | 31.0 | 29.9 | 29.8 | 32.4 |
| 120 | 27.8 | 28.9 | 29.4 | 29.6 | 28.5 | 28.5 | 30.9 |
| 162 | 26.2 | 27.3 | 27.7 | 28.1 | 26.9 | 26.8 | 29.1 |
| 204 | 24.7 | 26.1 | 26.0 | 26.5 | 25.2 | 25.7 | 27.3 |
| 246 | 23.2 | 24.5 | 24.2 | 25.1 | 23.5 | 24.1 | 25.5 |
| 268 | 22.3 | 23.6 | 23.3 | 24.3 | 22.5 | 23.3 | 24.6 |
| 305 | 20.5 | 22.3 | 21.1 | 22.7 | 20.6 | 21.7 | 23.3 |

It is evident from an examination of the results set forth in Table 3 that the feed supplement composition of this invention provide a means for obtaining significant increases in the milk production of ruminant animals such as dairy cows. It is also evident that Feed Supplement F was particularly effective to increase milk production. Also, cows receiving this supplement peaked at a higher level of milk production than the control or any of Feed Supplements A-E. Furthermore, cows receiving Feed Supplement F produced significantly more milk during the first four months of production in comparison to the control. For example, cows fed Supplement F produced 7106.5 kg. of milk over the 305 day lactation period while

6

# 0 070 868

cows fed the control produced only 6252.5 kg. of milk over the same period.

## Claims

1. A feed supplement composition for ruminant animals which comprises (1) 8 to 84 percent, by weight, of ammonium isobutyrate and (2) 16 to 92 percent, by weight, of a component having 3 to 63 percent, by weight, ammonium valerate, 3 to 51 percent, by weight, ammonium isovalerate and 3 to 67 percent, by weight, ammonium 2-methylbutyrate.

2. A composition according to claim 1, wherein the amount of ammonium isobutyrate is 21 to 50 percent, by weight, and the amount of component (2) is 50 to 79 percent, by weight.

3. A composition according to either of claims 1 or 2, wherein the amount of each ammonium salt in component (2) is at least 7 percent, by weight.

4. A composition according to either of claims 1 or 2, wherein the amount of each ammonium salt in component (2) is at least 13 percent, by weight.

5. A feed for ruminant animals comprising a composition of any of claims 1, 2, 3 or 4.

6. A feed according to claim 5, which also includes corn silage, hay, corn grain and urea.

7. A composition according to any of claims 1, 2, 3 or 4 in the form of an aqueous solution.

8. An aqueous solution according to claim 7, which comprises 20 to 35 percent, by weight, of water.

9. A method of feeding a ruminant animal which comprises orally administering to the animal, a composition according to any of claims 1, 2, 3, 4, 7 or 8.

10. A method according to claim 9, wherein 10 to 150 grams per day of the composition is fed to the animal.

## Revendications

1. Composition d'additif nutritionnel destiné aux ruminants, comprenant (1) 8 à 84%, en masse, d'isobutyrate d'ammonium et (2) 16 à 92%, en masse, d'un constituant contenant 3 à 63%, en masse, de valérate d'ammonium, 3 à 51%, en masse, d'isovalérate d'ammonium et 3 à 67%, en masse, de 2-méthyl-butyrate d'ammonium.

2. Composition conforme à la revendication 1, dans laquelle la quantité d'isobutyrate d'ammonium est de 21 à 50%, en masse,. et la quantité de constituant (2) est de 50 à 79%, en masse.

3. Composition conforme à l'une ou l'autre des revendications 1 ou 2, dans laquelle la quantité de chaque sel d'ammonium dans le constituant (2) est au moins de 7%, en masse.

4. Composition conforme à l'une ou l'autre des revendications 1 ou 2, dans laquelle la quantité de chaque sel d'ammonium dans le constituant (2) est au moins de 13%, en masse.

5. Aliment pour ruminants comprenant une composition conforme à l'une quelconque des revendications 1, 2, 3 ou 4.

6. Aliment conforme à la revendication 5, comprenant aussi du fourrage vert de maïs ensilé, du foin, du maïs en grains et de l'urée.

7. Composition conforme à l'une quelconque des revendications 1, 2, 3 ou 4 sous la forme d'une solution aqueuse.

8. Solution aqueuse conforme à la revendication 7, comprenant 20 à 30%, en masse, d'eau.

9. Procédé d'alimentation d'un ruminant comprenant l'administration par voie orale à l'animal d'une composition conforme à l'une quelconque des revendications 1, 2, 3, 4, ou 8.

10. Procédé conforme à la revendication 9, dans lequel on alimente l'animal avec 10 à 150 g par jour de la composition.

## Patentansprüche

1. Futterzusatzmittel für Wiederkäuer aus (1) 8 bis 84 Gew.-% Ammoniumisobutyrat und (2) 16 bis 92 Gew.-% einer Komponente aus 3 bis 63 Gew.-% Ammoniumvalerat, 3 bis 51 Gew.%- Ammoniumisovalerat und 3 bis 67 Gew.-% Ammonium-2-methylbutyrat.

2. Mittel nach Anspruch 1, dadurch gekennzeichnet, daß die Menge an Ammoniumisobutyrat 21 bis 50 Gew.-% und die Menge an Komponente (2) 50 bis 79 Gew.-% beträgt.

3. Mittel nach einem der Ansprüche 1 oder 2, dadurch gekennzeichnet, daß die Menge an jedem Ammoniumsalz in der Komponente (2) mindestens 7 Gew.-% beträgt.

4. Mittel nach Anspruch 1 oder 2, dadurch gekennzeichnet, daß die Menge an jedem Ammoniumsalz in der Komponente (2) bei mindestens 13 Gew.-% liegt.

5. Futter für Wiederkäuer, gekennzeichnet durch einen Gehalt an einem Zusatzmittel nach einem der Ansprüche 1, 2, 3 oder 4.

6. Futter nach Anspruch 5, dadurch gekennzeichnet, daß es ferner Maissilage, Heu, Getreide(Mais)körner und Harnstoff enthält.

7. Mittel nach einem der Ansprüche 1, 2, 3 oder 4 in Form einer wäßrigen Lösung.

8. Wäßrige Lösung nach Anspruch 7, gekennzeichnet durch einen Wassergehalt von 20 bis 35 Gew.-%.

9. Verfahren zur Fütterung eines Wiederkäuers, dadurch gekennzeichnet, daß man dem Wiederkäuer

**0 070 868**

ein Mittel nach einem der Ansprüche 1, 2, 3, 4, 7 oder 8 oral verabfolgt.

10. Verfahren nach Anspruch 9, dadurch gekennzeichnet, daß man an das Tier pro Tag 10 bis 150 g des Mittels verfüttert.

8